# EUROPEAN PATENT SPECIFICATION

(11) **EP 3 190 145 B1**
(45) Date of publication and mention of the grant of the patent: **27.06.2018**
(21) Application number: 15838097.2
(22) Date of filing: 27.07.2015
(51) Int. Cl.: C08J 3/20, B60C 1/00, C08K 3/36, C08K 5/405, C08L 9/06, C08L 91/00

(54) **METHOD FOR PRODUCING RUBBER COMPOSITION, RUBBER COMPOSITION AND TIRE**
VERFAHREN ZUR HERSTELLUNG EINER KAUTSCHUKZUSAMMENSETZUNG, KAUTSCHUKZUSAMMENSETZUNG UND REIFEN
PROCÉDÉ DE PRODUCTION D'UNE COMPOSITION DE CAOUTCHOUC, COMPOSITION DE CAOUTCHOUC ET PNEU

(30) Priority: 02.09.2014 JP 2014178406
(43) Date of publication of application: 12.07.2017
(73) Proprietor: Bridgestone Corporation, Tokyo 104-8340 (JP)
(72) Inventor: YAMAGISHI, Yasushi, Tokyo 104-8340 (JP)
(74) Representative: Lang, Johannes
(86) International application number: PCT/JP2015/003753
(87) International publication number: WO 2016/035242

(56) References cited:
- WO-A1-2012/043856
- WO-A1-2012/147891
- WO-A1-2012/147975
- JP-A- 2008 001 900
- JP-A- 2014 133 828
- US-A1- 2010 105 805
- US-A1- 2011 166 254
- US-A1- 2013 217 802
- US-A1- 2013 237 637
- US-A1- 2013 253 090
- US-A1- 2013 267 638
- US-A1- 2013 296 463

## Description

### TECHNICAL FIELD

The present disclosure relates to a method for producing a rubber composition, a rubber composition, and a tire.

### BACKGROUND

Rubber compositions used in tires are expected to display various aspects of performance such as low heat generation in order to improve vehicle fuel efficiency, good abrasion resistance in order to extend tire life, and running performance on a dry road surface, wet road surface, and/or icy and snowy road surface.

A known method for producing a rubber composition having low heat generation includes a first kneading step in which a first mixture containing a rubber component, a filler, a silane coupling agent, and thiourea or N,N'-diethyl thiourea is prepared and kneaded, and a second kneading step in which a second mixture is prepared by adding a vulcanizing agent to the kneaded first mixture and is kneaded to produce a rubber composition (for example, refer to PTL 1 and 2).

Through the method for producing a rubber composition described above, the activity of the silane coupling agent can be raised.

### CITATION LIST

### Patent Literature

PTL 1: WO 2013/099822 A1
PTL 2: WO 2012/043856 A1

### SUMMARY

### (Technical Problem)

There is also demand for a tire such as described above to have a good balance of ice and snow performance and abrasion resistance, and to be easily producible. Accordingly, objectives of the present disclosure are (i) to provide a method for producing a rubber composition through which a rubber composition is produced that can provide a tire with a good balance of ice and snow performance and abrasion resistance, (ii) to provide a rubber composition that can provide a tire with a good balance of ice and snow performance and abrasion resistance, and (iii) to provide an easily producible tire having a good balance of ice and snow performance and abrasion resistance.

### (Solution to Problem)

A presently disclosed method for producing a rubber composition containing: 100 parts by mass of a rubber component (A) including at least 80 mass% of a styrene-butadiene copolymer rubber; a filler (B) including from 80 parts by mass to 130 parts by mass of silica having a nitrogen adsorption specific surface area of at least 85 m²/g and less than 120 m²/g; from 5 parts by mass to 15 parts by mass of a silane coupling agent (C); at least one of thiourea and diethyl thiourea (D); and a vulcanizing agent (E), comprises kneading the rubber composition over a plurality of stages, wherein the kneading includes: a first kneading stage of kneading 100 parts by mass of the rubber component (A), the filler (B) including at least 80 parts by mass of the silica, at least 2 parts by mass of the silane coupling agent (C), and all or some of the at least one of thiourea and diethyl thiourea (D); and a second kneading stage of, after the first kneading stage, kneading the vulcanizing agent (E) and a kneaded product prepared through kneading in the first kneading stage.

### (Advantageous Effect)

Accordingly to the present disclosure, it is possible to (i) provide a method for producing a rubber composition through which a rubber composition is produced that can provide a tire with a good balance of ice and snow performance and abrasion resistance, (ii) provide a rubber composition that can provide a tire with a good balance of ice and snow performance and abrasion resistance, and (iii) provide an easily producible tire having a good balance of ice and snow performance and abrasion resistance.

### BRIEF DESCRIPTION OF THE DRAWING

In the accompanying drawing,

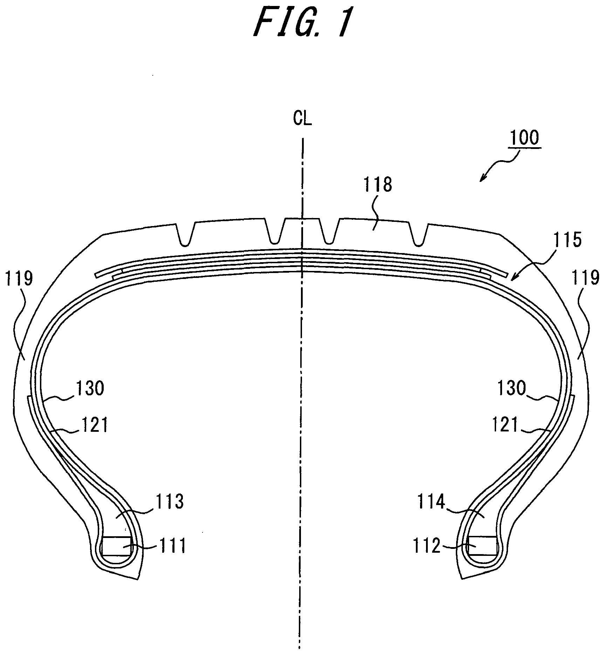

FIG. 1 is a tire width direction cross-sectional view of a tire according to one disclosed embodiment.

### DETAILED DESCRIPTION

The following provides an illustrative and detailed explanation of an embodiment of the presently disclosed method for producing a rubber composition and the presently disclosed rubber composition.

### (Method for producing rubber composition and rubber composition)

The presently disclosed method for producing a rubber composition includes at least a kneading process and may include other processes as necessary.

The presently disclosed rubber composition produced by the presently disclosed method for producing a rubber composition contains at least a rubber component (A), a filler (B), a silane coupling agent (C), at least one of thiourea and diethyl thiourea (D), and a vulcanizing agent (E), and may contain an oil (F), an organic acid compound (G), a guanidine (J), a sulfenamide (K), a thiazole (L), and other components as necessary.

### <Kneading process>

The kneading process is a process in which the rubber composition is kneaded over a plurality of stages. The kneading process includes at least a first kneading stage and a second kneading stage, and may further include an intermediate kneading stage between the first kneading stage and the second kneading stage, and other kneading stages as necessary.

### -First kneading stage-

In the first kneading stage, 100 parts by mass of the rubber component (A), the filler (B) including at least 80 parts by mass of silica, at least 2 parts by mass of the silane coupling agent (C), and all or some of the at least one of thiourea and diethyl thiourea (D) are kneaded. A preliminary composition is prepared through this kneading.

It should be noted that the preliminary composition prepared in the first kneading stage does not contain the vulcanizing agent (E). The preliminary composition prepared in the first kneading stage contains silica as the filler (B), and thus does not contain only fillers other than silica as the filler (B).

The maximum temperature of the rubber composition in the first kneading stage can be selected as appropriate depending on the objective without any specific limitations and is preferably from 120°C to 190°C, more preferably from 130°C to 175°C, and particularly preferably from 140°C to 170°C from a viewpoint of more favorably raising the coupling activity of the silane coupling agent (C).

In the first kneading stage, it is preferable that, first, a mixture containing the rubber component (A), the silica-containing filler (B), and the silane coupling agent (C) is prepared and kneaded, and that the at least one of thiourea and diethyl thiourea (D) is subsequently added to this mixture and kneaded therewith.

### -Second kneading stage-

After the first kneading stage, the vulcanizing agent (E) is kneaded with the kneaded product (preliminary composition) prepared through kneading in the first kneading stage. As a result of this kneading, the rubber composition is produced.

Moreover, some of the at least one of thiourea and diethyl thiourea (D) may be added in the second kneading stage.

Furthermore, a vulcanization accelerator may be further added in an appropriate amount in the second kneading stage as desired in order to accelerate vulcanization.

The maximum temperature of the rubber composition in the second kneading stage can be selected as appropriate depending on the objective without any specific limitations and is preferably from 60°C to 140°C, more preferably from 80°C to 120°C, and particularly preferably from 100°C to 120°C.

In transition from the first kneading stage to the second kneading stage or from a subsequently described intermediate kneading stage to the second kneading stage, it is preferable that the transition to the second kneading stage is made after the temperature of the rubber composition is lowered by at least 10°C from the temperature thereof straight after completion of kneading in the first kneading stage or the intermediate kneading stage.

### -Intermediate kneading stage-

The presently disclosed method for producing a rubber composition may include an intermediate kneading stage between the first kneading stage and the second kneading stage as necessary in which the preliminary composition prepared in the first kneading stage is further kneaded.

However, it should be noted that the vulcanizing agent (G) is not added in the intermediate kneading stage.

The maximum temperature of the rubber composition in the intermediate kneading stage can be selected as appropriate depending on the objective without any specific limitations and is preferably from 120°C to 190°C, more preferably from 130°C to 175°C, and particularly preferably from 140°C to 170°C.

A mixer used in the first kneading stage, the intermediate kneading stage, and the second kneading stage can be selected as appropriate depending on the objective without any specific limitations and may be, for example, a single-screw kneading extruder; a multi-screw kneading extruder (continuous kneading device); a mixer having meshing or non-meshing rotating rotors such as a Banbury mixer, an Intermix, or a kneader; or a roller (batch kneading device).

Conditions adopted in the kneading such as the rotor rotational speed, the ram pressure, the kneading temperature, and the type of kneading device can be selected as appropriate.

### <Rubber component (A)>

So long as the rubber component (A) used in the presently disclosed rubber composition includes at least 80 mass% of a styrene-butadiene copolymer rubber (SBR), the rubber component (A) may further include natural rubber and synthetic rubbers other than the styrene-butadiene copolymer rubber without any specific limitations.

Synthetic rubbers other than the styrene-butadiene copolymer rubber can be selected as appropriate depending on the objective without any specific limitations and examples thereof include synthetic diene-based polymer rubbers such as polybutadiene rubber (BR), polyisoprene rubber (IR), butyl rubber (IIR), and ethylene-propylene-diene terpolymer rubber (EPDM). One of such synthetic rubbers may be used individually, or two or more of such synthetic rubbers may be used in combination.

The content of the styrene-butadiene copolymer rubber (SBR) in the rubber component (A) can be selected as appropriate depending on the objective without any specific limitations other than being at least 80 mass%. A content of at least 80 mass% of the styrene-butadiene copolymer rubber (SBR) in the rubber component (A) enables the exhibition of a synergistic effect of the silica and the thiourea or diethyl thiourea.

### <Filler (B)>

The filler (B) used in the presently disclosed rubber composition can be selected as appropriate depending on the objective without any specific limitations other than including the prescribed amount of silica. For example, the filler (B) may be silica, a mixture of silica and carbon black, or a mixture of silica and an inorganic filler other than silica.

### -Silica-

The nitrogen adsorption specific surface area (N₂SA) of the silica can be selected as appropriate depending on the objective without any specific limitations other than being at least 85 m²/g and less than 120 m²/g, and is preferably from 95 m²/g to 115 m²/g, and more preferably from 100 m²/g to 110 m²/g.

A nitrogen adsorption specific surface area (N₂SA) of at least 85 m²/g and less than 120 m²/g provides the silica with a good balance of rubber reinforcement capability and dispersibility in the rubber component. It is advantageous for the nitrogen adsorption specific surface area (N₂SA) to be within the preferable range or the more preferable range described above in order to more efficiently achieve a good balance of rubber reinforcement capability of the silica and dispersibility of the silica in the rubber component.

The term "nitrogen adsorption specific surface area (N₂SA)" refers to a value that is measured in accordance with JIS K 6217-2:2001.

The type of silica can be selected as appropriate depending on the objective without any specific limitations and examples thereof include wet silica (hydrous silica), dry silica (anhydrous silica), and colloidal silica. One of such types of silica may be used individually, or two or more of such types of silica may be used in combination.

The amount of the silica that is compounded can be selected as appropriate depending on the objective without any specific limitations other than being from 80 parts by mass to 130 parts by mass relative to 100 parts by mass of the rubber component (A). However, from a viewpoint of improving abrasion resistance, the amount of the silica that is compounded relative to 100 parts by mass of the rubber component (A) is preferably from 80 parts by mass to 120 parts by mass, and more preferably from 90 parts by mass to 110 parts by mass.

### -Carbon black-

The carbon black enables an effect of lowering electrical resistance of the rubber composition and thereby preventing charging of the rubber composition to be obtained.

The carbon black can be selected as appropriate depending on the objective without any specific limitations and may be, for example, SAF, ISAF, IISAF, N339, HAF, FEF, GPF, or SRF grade carbon black having high, medium, or low structure. One of such types of carbon black may be used individually, or two or more of such types of carbon black may be used in combination.

Of these carbon blacks, SAF, ISAF, IISAF, N339, HAF, and FEF grade carbon blacks are preferable.

Note that in the present disclosure, the carbon black is not considered to be included among inorganic fillers.

The nitrogen adsorption specific surface area (N₂SA) of the carbon black can be selected as appropriate depending on the objective without any specific limitations and is preferably from 30 m²/g to 250 m²/g.

The term "nitrogen adsorption specific surface area (N₂SA)" refers to a value measured in accordance with JIS K 6217-2:2001.

The content of the carbon black can be selected as appropriate depending on the objective without any specific limitations and is preferably no greater than 20 mass% of the filler (B).

### -Inorganic filler other than silica-

The inorganic filler other than silica can be selected as appropriate depending on the objective without any specific limitations and examples thereof include inorganic compounds represented by formula (I), shown below.

dM¹ · xSiO_{y} · zH₂O ··· (I)

[In formula (I), M¹ is at least one selected from (i) a metal selected from the group consisting of aluminum, magnesium, titanium, calcium, and zirconium, (ii) an oxide of any of these metals, (iii) a hydroxide of any of these metals, (iv) a hydrate of any of these metals, and (v) a carbonate of any of these metals; d is an integer of 1-5; x is an integer of 0-10; y is an integer of 2-5; and z is an integer of 0-10. When x and z are both 0, formula (I) represents at least one metal selected from aluminum, magnesium, titanium, calcium, and zirconium, a metal oxide, or a metal hydroxide.]

Examples of inorganic compounds represented by formula (I) that can be selected as appropriate depending on the objective without any specific limitations include alumina (Al₂O₃) such as γ-alumina and α-alumina; alumina-hydrate (Al₂O₃·H₂O) such as boehmite and diaspore; aluminum hydroxide [Al(OH)₃] such as gibbsite and bayerite; aluminum carbonate [Al₂(CO₃)₂]; magnesium hydroxide [Mg(OH)₂]; magnesium oxide (MgO); magnesium carbonate (MgCO₃); talc (3MgO·4SiO₂·H₂O); attapulgite (5MgO·8SiO₂·9H₂O); titanium white (TiO₂); titanium black (TiO₂ₙ₋₁); calcium oxide (CaO); calcium hydroxide [Ca(OH)₂]; aluminum magnesium oxide (MgO·Al₂O₃); clay (Al₂O₃·2SiO₂); kaolin (Al₂O₃·2SiO₂·2H₂O); pyrophyllite (Al₂O₃·4SiO₂·H₂O); bentonite (Al₂O₃·4SiO₂·2H₂O); aluminum silicate (Al₂SiO₅, Al₄·3SiO₄·5H₂O, etc.); magnesium silicate (Mg₂SiO₄, MgSiO₃, etc.); calcium silicate (Ca₂·SiO₄, etc.); aluminum calcium silicate (Al₂O₃·CaO·2SiO₂, etc.); magnesium calcium silicate (CaMgSiO₄); calcium carbonate (CaCO₃); zirconium oxide (ZrO₂); zirconium hydroxide (ZrO(OH)₂·nH₂O); zirconium carbonate (Zr(CO₃)₂); and crystalline aluminosilicate salts containing a charge-correcting hydrogen, alkali metal, or alkaline earth metal, such as various types of zeolites. One of such inorganic compounds may be used individually, or two or more of such inorganic compounds may be used in combination.

Of these inorganic compounds, an inorganic compound for which M¹ in formula (I) is at least one selected from aluminum, oxides of aluminum, hydroxides of aluminum, hydrates thereof, and carbonates of aluminum is preferable.

The average particle diameter of the inorganic compound can be selected as appropriate depending on the objective without any specific limitations and is preferably from 0.01 µm to 10 µm, and more preferably from 0.05 µm to 5.0 µm from a viewpoint of achieving, for example, a good balance of kneading operability and abrasion resistance.

The amount of the filler (B) that is compounded can be selected as appropriate depending on the objective without any specific limitations other than being at least 80 parts by mass relative to 100 parts by mass of the rubber component (A). However, from a viewpoint of achieving a good balance of operability and abrasion resistance, the amount of the filler (B) that is compounded relative to 100 parts by mass of the rubber component (A) is preferably from 80 parts by mass to 150 parts by mass, more preferably from 85 parts by mass to 130 parts by mass, and particularly preferably from 95 parts by mass to 120 parts by mass.

### <Silane coupling agent (C)>

Even better operability during rubber processing can be obtained and a pneumatic tire can be provided with even better abrasion resistance through use of the silane coupling agent (C).

The silane coupling agent (C) used in the presently disclosed rubber composition can be selected as appropriate depending on the objective without any specific limitations and examples thereof include compounds represented by formula (II), shown below, and compounds represented by formula (III), shown below. One of such compounds may be used individually, or two or more of such compounds may be used in combination.

Of these compounds, compounds represented by formula (II) are particularly preferable. The reason for this is that a polysulfide bond moiety of the compound that reacts with the rubber component (A) can be easily activated by at least one selected from guanidines, sulfenamides, and thiazoles described further below.

(R¹O)₃₋ₚ(R²)ₚSi-R³-Sₐ-R³-Si(OR¹)₃₋ᵣ(R²)ᵣ ··· (II)

[In formula (II), R¹ is a linear, cyclic, or branched alkyl group having a carbon number of 1-8, a linear or branched alkoxyalkyl group having a carbon number of 2-8, or a hydrogen atom, and each R¹ may be the same or different in a situation in which more than one R¹ is present; R² is a linear, cyclic, or branched alkyl group having a carbon number of 1-8, and each R² may be the same or different in a situation in which more than one R² is present; and R³ is a linear or branched alkylene group having a carbon number of 1-8, and each R³ may be the same or different in a situation in which more than one R³ is present. Moreover, a is an average value of 2-6, and p and r are each an average value of 0-3 and may be the same or different to one another. However, p and r are not both 3.]

(R⁴O)₃₋ₛ(R⁵)ₛSi-R⁶-Sₖ-R⁷-Sₖ-R⁶-Si(OR⁴)₃₋ₜ(R⁵)ₜ ··· (III)

[In formula (III), R⁴ is a linear, cyclic, or branched alkyl group having a carbon number of 1-8, a linear or branched alkoxyalkyl group having a carbon number of 2-8, or a hydrogen atom, and each R⁴ may be the same or different in a situation in which more than one R⁴ is present; R⁵ is a linear, cyclic, or branched alkyl group having a carbon number of 1-8, and each R⁵ may be the same or different in a situation in which more than one R⁵ is present; and R⁶ is a linear or branched alkylene group having a carbon number of 1-8, and each R⁶ may be the same or different in a situation in which more than one R⁶ is present. Moreover, R⁷ is a divalent group selected from general formulae -S-R⁸-S-, -R⁹-Sₘ₁-R¹⁰-, and -R¹¹-Sₘ₂-R¹²-Sₘ₃-R¹³- (R⁸ to R¹³ are each a divalent hydrocarbon group having a carbon number of 1-20, a divalent aromatic group, or a divalent organic group including a heteroatom other than sulfur or oxygen; and m1, m2, and m3 are each an average value of at least 1 and less than 4, and may be the same or different to one another); each k is an average value of 1-6 and may be the same or different to one another; and s and t are each an average value of 0-3. However, s and t are not both 3.]

Specific examples of the silane coupling agent (C) represented by formula (II) that can be selected as appropriate depending on the objective without any specific limitations include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, and bis(2-monoethoxydimethylsilylethyl)disulfide.

Specific examples of the silane coupling agent (C) represented by formula (III) that can be selected as appropriate depending on the objective without any specific limitations include those having an average compositional formula (CH₃CH₂O)₃Si-(CH₂)₃-S₂-(CH₂)₆-S₂-(CH₂)₃-Si(OCH₂CH₃)₃, an average compositional formula (CH₃CH₂O)₃Si-(CH₂)₃-S₂-(CH₂)₁₀-S₂-(CH₂)₃-Si(OCH₂CH₃)₃, an average compositional formula (CH₃CH₂O)₃Si-(CH₂)₃-S₃-(CH₂)₆-S₃-(CH₂)₃-Si(OCH₂CH₃)₃, an average compositional formula (CH3CH₂O)3Si-(CH₂)3-S₄-(CH₂)₆-S₄-(CH₂)₃-Si(OCH₂CH3)3, an average compositional formula (CH₃CH₂O)₃Si-(CH₂)₃-S-(CH₂)₆-S₂-(CH₂)₆-S-(CH₂)₃-Si(OCH₂CH₃)₃, an average compositional formula (CH₃CH₂O)₃Si-(CH₂)₃-S-(CH2)₆-S_{2.5}-(CH₂)₆-S-(CH₂)₃-Si(OCH₂CH₃)₃, an average compositional formula (CH₃CH₂O)₃Si-(CH₂)₃-S-(CH₂)₆-S₃-(CH₂)₆-S-(CH₂)₃-Si(OCH₂CH₃)₃, an average compositional formula (CH₃CH₂O)₃Si-(CH₂)₃-S-(CH₂)₆-S₄-(CH₂)₆-S-(CH₂)₃-Si(OCH₂CH₃)₃, an average compositional formula (CH₃CH₂O)₃Si-(CH₂)₃-S-(CH₂)₁₀-S₂-(CH₂)₁₀-S-(CH₂)₃-Si(OCH₂CH₃)₃, an average compositional formula (CH₃CH₂O)₃Si-(CH₂)₃-S₄-(CH₂)₆-S₄-(CH₂)₆-S₄-(CH₂)₃-Si(OCH₂CH₃)₃, an average compositional formula (CH₃CH₂O)₃Si-(CH₂)₃-S₂-(CH₂)₆-S₂-(CH₂)₆-S₂-(CH₂)₃-Si(OCH₂CH₃)₃, and an average compositional formula (CH₃CH₂O)₃Si-(CH₂)₃-S-(CH₂)₆-S₂-(CH₂)₆-S₂-(CH₂)₆-S-(CH₂)₃-Si(OCH₂ CH₃)₃.

The amount of the silane coupling agent (C) that is compounded can be selected as appropriate depending on the objective without any specific limitations other than being from 5 parts by mass to 15 parts by mass relative to 100 parts by mass of the rubber component (A). However, from a viewpoint of improving reactivity with the silica, the amount of the silane coupling agent (C) that is compounded relative to 100 parts by mass of the rubber component (A) is preferably from 8 parts by mass to 12 parts by mass, and more preferably from 9 parts by mass to 11 parts by mass.

### <At least one of thiourea and diethyl thiourea (D)>

The presently disclosed rubber composition may contain thiourea, may contain diethyl thiourea, or may contain both thiourea and diethyl thiourea.

Thiourea is a compound represented by NH₂CSNH₂ and diethyl thiourea is a compound represented by C₂H₅NHCSNHC₂H₅.

The amount of the at least one of thiourea and diethyl thiourea (D) that is compounded can be selected as appropriate depending on the objective without any specific limitations and is preferably from 0.1 parts by mass to 2.0 parts by mass, more preferably from 0.3 parts by mass to 1.0 parts by mass, and particularly preferably from 0.4 parts by mass to 0.8 parts by mass relative to 100 parts by mass of the rubber component (A).

### <Vulcanizing agent (E)>

The vulcanizing agent (E) used in the presently disclosed rubber composition can be selected as appropriate depending on the objective without any specific limitations and may be, for example, sulfur.

The amount of the vulcanizing agent (E) that is compounded can be selected as appropriate depending on the objective without any specific limitations and is preferably from 0.1 parts by mass to 2.0 parts by mass, more preferably from 1.0 parts by mass to 2.0 parts by mass, and particularly preferably from 1.2 parts by mass to 1.8 parts by mass relative to 100 parts by mass of the rubber component (A).

### <Oil (F)>

The oil (F) that may be used in the presently disclosed rubber composition as necessary can be selected as appropriate depending on the objective without any specific limitations and examples thereof include paraffinic oils, naphthenic oils, and aromatic oils.

The amount of the oil (F) that is compounded can be selected as appropriate depending on the objective without any specific limitations and is preferably at least 40 parts by mass, more preferably from 40 parts by mass to 70 parts by mass, even more preferably from 42 parts by mass to 65 parts by mass, and particularly preferably from 45 parts by mass to 55 parts by mass relative to 100 parts by mass of the rubber component (A).

Ice and snow performance of a tire can be further improved through the rubber composition further containing the oil (F) and through the amount of the oil (F) that is compounded being at least 40 parts by mass relative to 100 parts by mass of the rubber component (A).

### <Organic acid compound (G)>

The organic acid compound (G) may be used to accelerate vulcanization.

The organic acid compound (G) that may be used in the presently disclosed rubber composition can be selected as appropriate depending on the objective without any specific limitations and examples thereof include saturated and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, and nervonic acid; resin acids such as rosin acid and modified rosin acid; and esters of saturated fatty acids, unsaturated fatty acids, and resin acids. One of such organic acid compounds may be used individually, or two or more of such organic acid compounds may be used in combination.

Of these organic acid compounds, stearic acid is preferable in terms of sufficiently functioning as a vulcanization accelerator.

Note that in a situation in which a styrene-butadiene copolymer obtained through emulsion polymerization or natural rubber is used as the rubber component (A), rosin acid (inclusive of modified rosin acid) or a fatty acid originally contained therein may be used as the organic acid compound (G). A styrene-butadiene copolymer obtained through emulsion polymerization normally contains rosin acid or the like since emulsifiers normally contains rosin acid or the like, and natural rubber normally contains a small amount of a fatty acid.

The amount of the organic acid compound (G) that is compounded can be selected as appropriate depending on the objective without any specific limitations and is preferably from 0.5 parts by mass to 4.0 parts by mass, more preferably from 1.0 parts by mass to 3.0 parts by mass, and particularly preferably from 1.5 parts by mass to 2.5 parts by mass relative to 100 parts by mass of the rubber component (A).

### <Guanidine (J)>

The guanidine (J) may be used to raise the activity of the silane coupling agent (C).

The guanidine (J) can be selected as appropriate depending on the objective without any specific limitations and examples thereof include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. One of such guanidines may be used individually, or two or more of such guanidines may be used in combination.

Of these guanidines, 1,3-diphenylguanidine, 1,3-di-o-tolylguanidine, and 1-o-tolylbiguanide are preferable, and 1,3-diphenylguanidine is more preferable in terms of having high reactivity.

The amount of the guanidine (J) that is compounded can be selected as appropriate depending on the objective without any specific limitations.

### <Sulfenamide (K)>

The sulfenamide (K) may be used to raise the activity of the silane coupling agent (C).

The sulfenamide (K) can be selected as appropriate depending on the objective without any specific limitations and examples thereof include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2- benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, and N,N-distearyl-2-benzothiazolylsulfenamide. One of such sulfenamides may be used individually, or two or more of such sulfenamides may be used in combination.

Of these sulfenamides, N-cyclohexyl-2-benzothiazolylsulfenamide and N-tert-butyl-2-benzothiazolylsulfenamide are preferable in terms of having high reactivity.

The amount of the sulfenamide (K) that is compounded can be selected as appropriate depending on the objective without any specific limitations.

### <Thiazole (L)>

The thiazole (L) may be used to raise the activity of the silane coupling agent (C).

The thiazole (L) can be selected as appropriate depending on the objective without any specific limitations and examples thereof include 2-mercaptobenzothiazole, di-2-benzothiazolyl disulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di(4-methyl-2-benzothiazolyl) disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, and 6-amino-2-mercaptobenzothiazole. One of such thiazoles may be used individually, or two or more of such thiazoles may be used in combination.

Of these thiazoles, 2-mercaptobenzothiazole and di-2-benzothiazolyl disulfide are preferable in terms of having high reactivity.

The amount of the thiazole (L) that is compounded can be selected as appropriate depending on the objective without any specific limitations.

### <Other components>

Other components that may be used in the presently disclosed rubber composition as necessary can be selected as appropriate depending on the objective without any specific limitations and examples thereof include age resistors (for example, N-(1,3-dimethylbutyl)-N'-phenyl-p-phenylenediamine and polymerized 2,2,4-trimethyl-1,2-dihydroquinoline), vulcanization accelerators (for example, 1,3-diphenylguanidine, di-2-benzothiazolyl disulfide, and N-tert-butyl-2-benzothiazolylsulfenamide), vulcanization aids (for example, zinc oxide), and softeners. Commercially available products may be used as these other components.

The amount (mass) of the silane coupling agent (C) expressed as a ratio relative to the amount (mass) of the filler (B) (i.e., amount of silane coupling agent (C)/amount of filler (B)) can be selected as appropriate depending on the objective without any specific limitations and is preferably from 0.01 to 0.20, more preferably from 0.03 to 0.20, and particularly preferably from 0.04 to 0.10.

An effect of lowering heat generation of the rubber composition can be obtained more easily as a result of the aforementioned ratio (amount of silane coupling agent (C)/amount of filler (B)) being at least 0.01 and production cost of the rubber composition can be lowered such as to make the rubber composition more economical as a result of the aforementioned ratio (amount of silane coupling agent (C)/amount of filler (B)) being no greater than 0.20.

The presently disclosed method for producing a rubber composition enables a rubber composition to be obtained that can provide a tire with a good balance of ice and snow performance and abrasion resistance.

Moreover, as a result of the presently disclosed rubber composition being produced through the presently disclosed method for producing a rubber composition, the rubber composition can provide a tire in which the rubber composition is used with a good balance of ice and snow performance and abrasion resistance.

### (Tire)

The presently disclosed tire includes a tread in which the rubber composition described above is used. Accordingly, it is possible to provide an easily producible tire having a good balance of ice and snow performance and abrasion resistance.

The following describes a tire according to one disclosed embodiment with reference to FIG. 1. The tire 100 includes a pair of bead cores 111 and 112, stiffeners 113 and 114, and a carcass ply 121. The stiffeners 113 and 114 extend outward from the bead cores 111 and 112 in a tire radial direction. The carcass ply 121 is folded back outward of the stiffeners 113 and 114 in a tire width direction at the bead cores 111 and 112 such as to form a horseshoe-type tire case shape. A belt 115 composed of a plurality of belt layers is located outward of the carcass ply 121 in the tire radial direction.

A tread 118 is located outward of the belt 115 in the tire radial direction. Moreover, an inner liner 130 that serves as an air permeation prevention layer is located inward of the carcass ply 121. The tread 118 is formed using the presently disclosed rubber composition.

In addition, sidewalls 119 are formed outward of the carcass ply 121 in the tire width direction. The sidewalls 119 may be made from colored rubber.

The method by which the tire is produced can be a conventional method. For example, components used in production of a normal tire, such as a carcass ply layer, a belt layer, a tread layer, and so forth containing unvulcanized rubber, may be laminated on a tire molding drum in order, and the drum may be subsequently removed to obtain a green tire. Thereafter, the green tire may be heated and vulcanized in accordance with a standard method to thereby obtain a desired tire (for example, a pneumatic tire).

### EXAMPLES

The following provides a more detailed explanation of the present disclosure through examples. However, the present disclosure is not in any way limited by the following examples.

In the following test examples (examples and comparative examples), the materials shown below were used as rubber composition components.
*1: BR (A); butadiene rubber; high-cis butadiene rubber produced by JSR Corporation; product name "BR01"
*2: SBR (A); emulsion polymerized styrene-butadiene copolymer rubber produced by JSR Corporation; product name "#1500"
*3: Carbon black (B); N220 (ISAF) produced by Asahi Carbon Co., Ltd.; product name "#80"
*4: Silica (BET specific surface area 200 m²/g) (B)
*5: Silica (BET specific surface area 105 m²/g) (B)
*6: Silica (BET specific surface area 60 m²/g) (B)
*7: Silane coupling agent (C); bis(3-triethoxysilylpropyl)disulfide (average sulfur chain length: 2.35); silane coupling agent produced by Evonik; product name "Si75®" (Si75 is a registered trademark in Japan, other countries, or both)
*8: Oil (F)
*9: Diethyl thiourea (D); C₂H₅NHCSNHC₂H₅
*10: Thiourea (D); NH₂CSNH₂
*11: Stearic acid (G)
*11-2: Palmitic acid (G)
*12: Age resistor 6PPD; N-(1,3-dimethylbutyl)-N'-phenyl-p-phenylenediamine produced by Ouchi Shinko Chemical Industrial Co., Ltd.; product name "NOCRAC 6C"
*13: Age resistor TMDQ; polymerized 2,2,4-trimethyl-1,2-dihydroquinoline produced by Ouchi Shinko Chemical Industrial Co., Ltd.; product name "SANCELER DM"
*14: Vulcanization aid (zinc oxide)
*15: Vulcanization accelerator (1,3-diphenylguanidine)
*16: Vulcanization accelerator MBTS; di-2-benzothiazolyl disulfide produced by Sanshin Chemical Industry Co., Ltd.; product name "SANCELER DM"
*17: Vulcanization accelerator TBBS; N-tert-butyl-2-benzothiazolylsulfenamide produced by Sanshin Chemical Industry Co., Ltd.; product name "SANCELER NS"
*18: Sulfur (E)

### (Examples 1-9 and Comparative Examples 1-10)

Rubber compositions were prepared according to the formulations and kneading methods shown in Tables 1-3. For each rubber composition, kneading was performed by a Banbury mixer with a maximum temperature of the rubber composition in the first kneading stage adjusted to 150°C. The performance of each of the rubber compositions was evaluated as follows.

### <Performance evaluation>

### (1) Icy and snowy road running performance (ice and snow performance) test

Size 195/65R15 tires were prepared by using the rubber composition in a tread of each of the tires.

Each of the prepared tires was fitted onto an applicable rim stipulated by JATMA standards and was used with a prescribed internal pressure as a pneumatic tire. The tires were fitted onto a vehicle and a test was carried out as described below in order to evaluate the performance of the pneumatic tires prepared using the rubber composition.

A test rider rode the vehicle in various riding styles on an icy and snowy course and subjectively evaluated the running performance of the tire during running. Specifically, index values serving as a comparative evaluation were calculated for Examples 1-3, 8, and 9 and Comparative Examples 2, 3, and 7-10 by taking the evaluation result for Comparative Example 1 to be 100, an index value serving as a comparative evaluation was calculated for Example 4 by taking the evaluation result for Comparative Example 4 to be 100, an index value serving as a comparative evaluation was calculated for Example 5 by taking the evaluation result for Comparative Example 5 to be 100, and an index value serving as a comparative evaluation was calculated for Example 6 by taking the evaluation result for Comparative Example 6 to be 100. The evaluation results are shown in Tables 1-3. A higher index value indicates that a tire has better ice and snow performance.

### (2) Abrasion resistance test

Size 195/65R15 tires were prepared by using the rubber composition in a tread of each of the tires.

Each of the prepared tires was fitted onto an applicable rim stipulated by JATMA standards and was used with a prescribed internal pressure as a pneumatic tire. The tires were fitted onto a vehicle and a test was carried out as described below in order to evaluate the performance of the pneumatic tires prepared using the rubber composition.

A test rider rode the vehicle for 20,000 km on a test course having a paved road surface. The remaining groove depth after running was measured and tire abrasion resistance was evaluated based on this remaining groove depth. Specifically, index values serving as a comparative evaluation were calculated for Examples 1-3, 8, and 9 and Comparative Examples 2, 3, and 7-10 by taking the evaluation result for Comparative Example 1 to be 100, an index value serving as a comparative evaluation was calculated for Example 4 by taking the evaluation result for Comparative Example 4 to be 100, an index value serving as a comparative evaluation was calculated for Example 5 by taking the evaluation result for Comparative Example 5 to be 100, and an index value serving as a comparative evaluation was calculated for Example 6 by taking the evaluation result for Comparative Example 6 to be 100. The evaluation results are shown in Tables 1-3. A higher index value indicates that a tire has higher abrasion resistance.

### (Table 1)

### (Table 2)

### (Table 3)

Comparison of Examples 1-3 with Comparative Examples 1-3, Example 4 with Comparative Example 4, Example 5 with Comparative Example 5, Example 6 with Comparative Example 6, and Examples 7-9 with Comparative Example 1 shows that an effect of enabling easy production of a tire having a good balance of ice and snow performance and abrasion resistance is achieved using the presently disclosed rubber composition.

### INDUSTRIAL APPLICABILITY

Accordingly to the present disclosure, it is possible to (i) provide a method for producing a rubber composition through which a rubber composition is produced that can provide a tire with a good balance of ice and snow performance and abrasion resistance, (ii) provide a rubber composition that can provide a tire with a good balance of ice and snow performance and abrasion resistance, and (iii) provide an easily producible tire having a good balance of ice and snow performance and abrasion resistance.

### REFERENCE SIGNS LIST

- 100: tire
- 111, 112: bead core
- 113, 114: stiffener
- 115: belt
- 118: tread
- 119: sidewall
- 121: carcass ply
- 130: inner liner
- CL: tire equatorial plane

**Table 1**

| | | | | Comparative Example 1 | Comparative Example 2 | Comparative Example 3 | Example 1 | Example 2 | Example 3 |
|---|---|---|---|---|---|---|---|---|---|
| | First kneading stage | Rubber component (A) | BR *1 | 10 | 10 | 10 | 10 | 10 | 10 |
| | | | SBR *2 | 90 | 90 | 90 | 90 | 90 | 90 |
| | | Filler (B) | Carbon black *3 | 10 | 10 | 10 | 10 | 10 | 10 |
| | | | Silica (specific surface area 200 m²/g) *4 | 100 | - | 100 | - | - | - |
| | | | Silica (specific surface area 105 m²/g) *5 | - | 100 | - | 100 | 100 | 90 |
| | | | Silica (specific surface area 60 m²/g) *6 | - | - | - | - | - | - |
| | | Silane coupling agent (C) | Silane coupling agent *7 | 10 | 10 | 10 | 10 | 10 | 10 |
| | | Oil (F) | Oil *8 | 50 | 50 | 50 | 50 | 50 | 50 |
| | | Thiourea (D) | Diethyl thiourea *9 | - | - | - | - | 0.6 | - |
| Formulation | | | Thiourea *10 | - | - | 0.6 | 0.6 | - | 0.6 |
| | Second kneading stage | Organic acid compound (G) | Stearic acid *11 | 2 | 2 | 2 | 2 | 2 | 2 |
| | | Age resistor | 6PPD *12 | 1 | 1 | 1 | 1 | 1 | 1 |
| | | | TMDQ *13 | 1 | 1 | 1 | 1 | 1 | 1 |
| | | Vulcanization aid | Zinc oxide *14 | 2.5 | 2.5 | 2.5 | 2.5 | 2.5 | 2.5 |
| | | Vulcanization accelerator | 1,3-Diphenylguanidine *15 | 0.6 | 0.6 | 0.6 | 0.6 | 0.6 | 0.6 |
| | | | MBTS *16 | 1 | 1 | 1 | 1 | 1 | 1 |
| | | | TBBS *17 | 0.6 | 0.6 | 0.6 | 0.6 | 0.6 | 0.6 |
| | | Vulcanizing agent (E) | Sulfur *18 | 1.5 | 1.5 | 1.5 | 1.5 | 1.5 | 1.5 |
| Tire performance | | Ice and snow performance | | 100 | 108 | 101 | 112 | 113 | 115 |
| | | Abrasion resistance | | 100 | 88 | 101 | 102 | 102 | 100 |

**Table 2**

| | | | | Comparative Example 4 | Example 4 | Comparative Example 5 | Example 5 | Comparative Example 6 | Example 6 | Comparative Example 7 | Example 7 | Comparative Example 8 | Comparative Example 9 | Comparative Example 10 |
|---|---|---|---|---|---|---|---|---|---|---|---|---|---|---|
| | First kneading stage | Rubber - component (A) | BR *1 | 10 | 10 | 10 | 10 | 10 | 10 | 10 | 10 | 25 | 10 | 10 |
| | | | SBR *2 | 90 | 90 | 90 | 90 | 90 | 90 | 90 | 85 | 75 | 90 | 90 |
| | | Filler(B) | Carbon black *3 | 10 | 10 | 10 | 10 | 25 | 25 | 10 | 10 | 10 | 10 | 10 |
| | | | Silica (specific surface area 200 m²/g) *4 | - | - | - | - | - | - | - | - | - | - | - |
| | | | Silica (specific surface area 105 m²/g) *5 | 125 | 125 | 100 | 100 | 100 | 100 | - | 100 | 100 | 135 | 75 |
| | | | Silica (specific surface area 60 m²/g) *6 | - | - | - | - | - | - | 100 | - | - | - | - |
| | | Silane coupling agent (C) | Silane coupling agent *7 | 10 | 10 | 10 | 10 | 10 | 10 | 10 | 10 | 10 | 10 | 10 |
| | | Oil (F) | Oil *8 | 50 | 50 | 30 | 30 | 50 | 50 | 50 | 50 | 50 | 50 | 50 |
| Formulation | | Thiourea (D) | Diethyl thiourea *9 | - | - | - | - | - | - | - | - | - | - | - |
| | | | Thiourea *10 | - | 0.6 | - | 0.6 | - | 0.6 | 0.6 | 0.6 | 0.6 | 0.6 | 0.6 |
| | Second kneading stage | Organic acid compound (G) | Stearic acid *11 | 2 | 2 | 2 | 2 | 2 | 2 | 2 | 2 | 2 | 2 | 2 |
| | | Age resistor | 6PPD *12 | 1 | 1 | 1 | 1 | 1 | 1 | 1 | 1 | 1 | 1 | 1 |
| | | | TMDQ *13 | 1 | 1 | 1 | 1 | 1 | 1 | 1 | 1 | 1 | 1 | 1 |
| | | Vulcanization aid | Zinc oxide *14 | 2.5 | 2.5 | 2.5 | 2.5 | 2.5 | 2.5 | 2.5 | 2.5 | 2.5 | 2.5 | 2.5 |
| | | Vulcanization accelerator | 1,3-Diphenylguanidine*15 | 0.6 | 0.6 | 0.6 | 0.6 | 0.6 | 0.6 | 0.6 | 0.6 | 0.6 | 0.6 | 0.6 |
| | | | MBTS *6 | 1 | 1 | 1 | 1 | 1 | 1 | 1 | 1 | 1 | 1 | 1 |
| | | | TBBS *17 | 0.6 | 0.6 | 0.6 | 0.6 | 0.6 | 0.6 | 0.6 | 0.6 | 0.6 | 0.6 | 0.6 |
| | | Vulcanizing agent (E) | Sulfur *18 | 1.5 | 1.5 | 1.5 | 1.5 | 1.5 | 1.5 | 1.5 | 1.5 | 1.5 | 1.5 | 1.5 |
| Tire performance | | Ice and snow performance | | 100 | 104 | 100 | 100 | 100 | 102 | 102 | 103 | 100 | 98 | 105 |
| | | Abrasion resistance | | 100 | 110 | 100 | 111 | 100 | 110 | 98 | 114 | 100 | 95 | 82 |

**Table 3**

| | | | | Example 1 | Example 8 | Example 9 |
|---|---|---|---|---|---|---|
| | First kneading stage | Rubber component (A) | BR *1 | 10 | 10 | 10 |
| | | | SBR *2 | 90 | 90 | 90 |
| | | Filler (B) | Carbon black *3 | 10 | 10 | 10 |
| | | | Silica (specific surface area 200 m²/g) *4 | - | - | - |
| | | | Silica (specific surface area 105 m²/g) *5 | 100 | 100 | 100 |
| | | | Silica (specific surface area 60 m²/g) *6 | - | - | - |
| | | Silane coupling agent (C) | Silane coupling agent *7 | 10 | 15 | 10 |
| | | Oil (F) | Oil *8 | 50 | 50 | 50 |
| Formulation | | Thiourea (D) | Diethyl thiourea *9 | - | - | - |
| | | | Thiourea *10 | 0.6 | 0.6 | 0.6 |
| | Second kneading stage | Organic acid compound (G) | Stearic acid *11 | 2 | 2 | - |
| | | | Other organic acid *11-2 | - | - | 2 |
| | | Age resistor | 6PPD *12 | 1 | 1 | 1 |
| | | | TMDQ *13 | 1 | 1 | 1 |
| | | Vulcanization aid | Zinc oxide *14 | 2.5 | 2.5 | 2.5 |
| | | Vulcanization accelerator | 1,3-Diphenylguanidine *15 | 0.6 | 0.6 | 0.6 |
| | | | MBTS *16 | 1 | 1 | 1 |
| | | | TBBS *17 | 0.6 | 0.6 | 0.6 |
| | | Vulcanizing agent (E) | Sulfur *18 | 1.5 | 1.5 | 1.5 |
| Tire performance | | Ice and snow performance | | 112 | 113 | 111 |
| | | Abrasion resistance | | 102 | 102 | 101 |

## Claims

1. A method for producing a rubber composition containing:
100 parts by mass of a rubber component (A) including at least 80 mass% of a styrene-butadiene copolymer rubber;
a filler (B) including from 80 parts by mass to 130 parts by mass of silica having a nitrogen adsorption specific surface area of at least 85 m²/g and less than 120 m²/g;
from 5 parts by mass to 15 parts by mass of a silane coupling agent (C);
at least one of thiourea and diethyl thiourea (D); and
a vulcanizing agent (E),
the method comprising kneading the rubber composition over a plurality of stages, wherein
the kneading includes:
a first kneading stage of kneading 100 parts by mass of the rubber component (A), the filler (B) including at least 80 parts by mass of the silica, at least 2 parts by mass of the silane coupling agent (C), and all or some of the at least one of thiourea and diethyl thiourea (D); and
a second kneading stage of, after the first kneading stage, kneading the vulcanizing agent (E) and a kneaded product prepared through kneading in the first kneading stage.

2. The method for producing a rubber composition of claim 1, wherein
the rubber composition further contains an oil (F), and
the oil (F) is compounded in an amount of at least 40 parts by mass relative to 100 parts by mass of the rubber component (A).

3. A rubber composition producible by the method for producing a rubber composition of claim 1 or 2.

4. A tire comprising a tread in which the rubber composition of claim 3 is used.

## Patentansprüche

1. Verfahren zum Herstellen einer Gummizusammensetzung, die enthält:
100 Masseteile einer Gummikomponente (A), die zumindest 80 Masseprozente eines Styren-Butadien-Copolymer-Gummis beinhaltet;
einen Füllstoff (B), der von 80 Masseteile bis 130 Masseteile von Siliziumdioxid beinhaltet, das einen stickstoffadsorptionsspezifischen Oberflächenbereich von zumindest 85 m²/g und weniger als 120 m²/g aufweist;
von 5 Masseteile bis 15 Masseteile eines Silankopplungsmittels (C);
zumindest einen von Thioharnstoff und Diethylthioharnstoff (D); und
ein Vulkanisierungsmittel (E),
wobei das Verfahren ein Kneten der Gummizusammensetzung über eine Vielzahl von Stufen umfasst, wobei das Kneten beinhaltet:
eine erste Knetstufe zum Kneten der 100 Masseteile der Gummikomponente (A), des Füllstoffes (B) einschließlich von zumindest 80 Masseteilen des Siliziumdioxids, zumindest zwei Masseteilen des Silankopplungsmittels (C) und alle oder einige von dem zumindest einen von Thioharnstoff und Diethylthioharnstoff (D); und
eine zweite Knetstufe zum, nach der ersten Knetstufe, Kneten des Vulkanisierungsmittels (E) und eines gekneteten Produkts, das durch das Kneten in der ersten Knetstufe vorbereitet wurde.

2. Verfahren zum Herstellen einer Gummizusammensetzung nach Anspruch 1, wobei die Gummizusammensetzung ferner ein Öl (F) enthält und wobei das Öl (F) in einer Menge von zumindest 40 Masseteilen relativ zu 100 Masseteilen der Gummikomponente (A) vermischt wird.

3. Gummizusammensetzung, die durch das Verfahren zum Herstellen einer Gummizusammensetzung nach Anspruch 1 oder 2 herstellbar ist.

4. Rad, das eine Lauffläche aufweist, in welcher die Gummizusammensetzung nach Anspruch 3 verwendet wird.

## Revendications

1. Procédé de production d'une composition de caoutchouc, contenant :
100 parties en masse d'un composant caoutchouc (A), comprenant au moins 80% en masse d'un caoutchouc copolymère styrène-butadiène ;
une charge (B), comprenant de 80 parties en masse à 130 parties en masse d'une silice ayant une aire spécifique d'adsorption d'azote d'au moins 85 m²/g et inférieure à 120 m²/g ;
de 5 parties en masse à 15 parties en masse d'un agent de couplage de type silane (C) ; au moins l'une de la thiourée et de la diéthylthiourée (D) ; et
un agent de vulcanisation (E),
le procédé comprenant le malaxage de la composition de caoutchouc en une pluralité d'étapes,
le malaxage comprenant :
une première étape de malaxage consistant à malaxer 100 parties en masse du composant caoutchouc (A), la charge (B) comprenant au moins 80 parties en masse de la silice, au moins 2 parties en masse de l'agent de couplage de type silane (C), et la totalité ou une partie de l'au moins une de la thiourée et de la diéthylthiourée (D) ; et
une deuxième étape de malaxage consistant, après la première étape de malaxage, à malaxer l'agent de vulcanisation (E) et un produit malaxé préparé par malaxage dans la première étape de malaxage.

2. Procédé de production d'une composition de caoutchouc selon la revendication 1, dans lequel
la composition de caoutchouc comprend en outre une huile (F), et
l'huile (F) est mélangée en une quantité d'au moins 40 parties en masse pour 100 parties en masse du composant caoutchouc (A).

3. Composition de caoutchouc pouvant être produite par le procédé de production d'une composition de caoutchouc selon la revendication 1 ou 2.

4. Pneumatique comprenant une bande de roulement dans laquelle est utilisée la composition de caoutchouc selon la revendication 3.
